# EUROPEAN PATENT APPLICATION

(11) **EP 4 566 493 A1**
(43) Date of publication of application: **11.06.2025**
(21) Application number: 23215292.6
(22) Date of filing: 08.12.2023
(51) Int. Cl.: A47J 36/32

(54) **METHOD AND SYSTEM FOR PROVIDING RECIPES FOR COOKING**

(71) Applicant: BSH Hausgeräte GmbH, 81739 München (DE)
(72) Inventor: Sacha, Magdalena, 02-769 Warsaw (PL); Steimer, Andreas, 75328 Schoemberg (DE)

(57) **Abstract**

The present invention relates to a method (M1, M2) for providing recipes (VR, TR) for cooking to a user (N1, N2, N3) of a cooking device (10), a related data processing program product, a control unit (1) of the cooking device, a related central entity (50) and a system (80). The method comprises the steps of providing a trained recipe generator and/or training a recipe generator (S1, S11); receiving a trigger, especially a request, a query or a prompt, from the user of the cooking device (U1, U11); generating, based on the trigger, a new recipe using the recipe generator (S3, U13); and providing the new recipe to the user (U4, U14).

## Description

The present invention relates to a method for providing recipes for cooking to a user of a cooking device, a related data processing program product, a control unit of the cooking device, a related central entity (like a server or a cloud service) and a system comprising the cooking device, the control unit and the central entity.

Home appliances for cooking are attractive for users if they are easy to handle and the resulting meals are delicious. Thus, home appliance manufacturers have a genuine interest to provide the end users of their home appliances with creative and tasty recipes. This is especially true if the cooking devices are controlled automatically according to a recipe, which can be downloaded to e.g. an automatic food processor.

A food processor is an electric appliance, which may be used, for example, to chop, blend, puree, or grind food, while heating it. A food processor typically comprises a heated bowl and an electric motor for driving exchangeable tools that can be used for various tasks such as slicing vegetables, shredding cheese, making dough, or stirring sauces. An example of a food processor is the Cooklt manufactured by Bosch.

Typically recipes for a food processor are downloaded from the Internet, e.g. from a server of the home appliance manufacturer, or from a social network, in which users may exchange recipes which they created on their own. While this approach works well, of course, the number of available recipes is limited.

Thus, it is an object of the present invention to provide an improved technique for providing recipes for cooking to a user. This object is accomplished by the subject-matter of the independent claims. Embodiments are described in the dependent claims and the following description as well as the figures.

According to an aspect, the invention comprises a method for providing recipes for cooking to a user of a cooking device. The method can be implemented e.g. by a computer. The cooking device may comprise one or more elements of a group comprising a food processor (which may be automatic), a blender, an oven, a cooktop, a microwave, and an exhaust hood. According to the method, a trained recipe generator is provided or a recipe generator is trained. Training may also comprise pre-training and/or fine-tuning. A trigger is received from the user of the cooking device (and/or the control unit of the cooking device) and based on the trigger a new recipe is generated using the recipe generator. The new recipe is then provided to the user. This may mean, for example, that the recipe is rendered step-by-step to the user using a display or a loudspeaker and/or it may mean that the cooking device is automatically controlled according to the recipe. The trigger may comprise a request (e.g. a request formulated by voice and captured by a microphone), a query or a prompt (e.g. something like "give me a Chinese recipe with duck"). In some embodiments, already pressing a button or a simple instruction (like "start") may be enough as a trigger.

Using a recipe generator may provide the advantage that the proposed recipes may be especially creative and/or surprising. Moreover, a huge number of recipes may be generated easily with little effort and costs. The recipe generator may have been trained using thousands of recipes taken from the Internet, such that the recipe generator may be able to provide suitable recipes for any taste and occasion. The trigger may allow the user to lead the recipe generator reliably in the right direction, i.e. he may give the recipe generator valuable hints about the characteristics the proposed recipe shall possess. For example, he may choose the main ingredient (e.g. pork, beef, chicken), a regional cuisine (e.g. Italian, Chinese, Thai), a taste (e.g. sweet, sour, bitter, umami), a diet (e.g. gluten-free, without lactose) and/or a food class (e.g. cake, soup). With a very unspecific trigger (like pushing a button or saying "start") a large amount of creativity may be expected, whereas a very specific trigger (like "give me a recipe for red-wine cake based on spelt flour prepared in a bundt cake pan") may lead to a recipe which fits especially accurately to the wishes of the user.

The recipe generator may work based on generative artificial intelligence. It may comprise, for example, a foundational model. Preferably, it comprises a large language model. Well known large language models are, for example, OpenAI's GPT-4 (also known as ChatGPT), Google's PaLM, and Meta's LLaMA. Large language models may have the advantage that they can provide a very accurate representation of the data because they often have millions of parameters and are therefore able to capture the nuances of the data. This can be particularly advantageous when dealing with natural language data, as the meaning of words can vary greatly depending on the context in which they are used. Moreover, large language models may be trained on very large data sets. This may be relevant because the more data a model is trained on, the better it will be at generalizing to new data.

In some embodiments, the recipe generator has been trained and/or is trained using language-to-language learning and/or language-to-tabular learning. Using language-to-language learning, a large language model may be e.g. fine-tuned to a specific task via a set of query-answer pairs {(xₙ,yₙ)|n = 1,... ,N}, collected as a training set. More specifically, some queries xₙ of the type "a traditional swabian dinner involving 500g of beans, 100g of flour..." followed by a precise recipe yₙ, i.e. some detailed, verbose description of cooking steps for some given meal, may be used as a training set, such that the large language model is trained to output yₙ upon being prompted by xₙ. Language-to-tabular learning may be tailored more specifically to an automatic food processor like the Cooklt, as a food processor generally uses tabularized, step-wise instructions (such as "stir at 100 rpm for 2 minutes", "bake at 170°C for 10 minutes" etc.). In this case, a training set {(xₙ,zₙ)|n = 1,... ,N} may be collected, with zₙ being the tabularized instruction as a response to query xₙ. Of course, also for other cooking devices (e.g. for smart ovens) language-to-tabular learning may be advantageous and may be used.

While language-to-tabular learning may have the advantage of directly providing the tabularized data format that may be needed by the cooking device, language-to-language learning may be used more easily as e.g. ChatGPT is already based on language-to-language learning. Therefore, it may be especially advantageous to combine language-to-language learning and language-to-tabular learning. Accordingly, in some embodiments the method may comprise the further step of translating the new recipe into a sequence of steps taken from a list of predetermined actions, which are executable by the cooking device. During the translation, technical constraints of the cooking device may be taken into account. Thus, a new recipe as a verbose response yₙ may be translated to a specific tabular format zₙ that may be needed by the cooking device. A corresponding translation function may be engineered manually and/or learned as well by a large language model.

Various embodiments with regard to the distribution of the functionalities within the infrastructure (e.g. comprising clouds, servers, Internet connections and many cooking devices as well as control units) are possible and comprised by the invention. In some embodiments, the trained recipe generator is provided and/or trained at a central entity. The central entity may be, for example, a server, which may be located somewhere in the Internet or at the premises of the home appliance manufacturer. The central entity may also be a cloud service, which is e.g. implemented as migrate-able software code within a (possibly globally) distributed server farm, which preferably performs load balancing to optimize performance. A server and a cloud service may also be combined to form a central entity.

The trigger may be received from the user at a control unit of the cooking device. The control unit may be integrated into the cooking device or it may be separate from the cooking device, but connected to the cooking device. Especially in the latter case, the control unit preferably comprises a computer, a mobile device, a tablet PC, a smartphone and/or a smart speaker. In a preferred embodiment, the control unit comprises a smart kitchen dock (a smart speaker offered by Bosch) and a tablet PC or a smartphone. The trigger may be sent from the control unit to the central entity, where the new recipe may be generated, based on the trigger, using the recipe generator. The new recipe may then be sent from the central entity to the control unit, such that the new recipe may be provided to the user by the control unit.

In some embodiments, the recipe generator is sent from the central entity to a control unit of the cooking device. This may allow for a local execution of the recipe generator and local learning based on input received from the user. Accordingly, in some embodiments the trigger is received from the user at the control unit, the new recipe is generated (notably by the control unit) based on the trigger using the recipe generator and the new recipe is provided to the user by the control unit.

In some embodiments, the method comprises the further step of compressing the recipe generator at the central entity to generate a compressed version of the recipe generator. The compressed version of the recipe generator may be sent from the central entity to the control unit of the cooking device. All features mentioned within this disclosure, which relate to the recipe generator, may be also applied to the compressed version of the recipe generator and vice versa.

The recipe generator is preferably compressed using knowledge distillation, wherein the recipe generator is a teacher model and the compressed version of the recipe generator is a student model. Knowledge distillation relates to a process of transferring knowledge from a large model to a smaller one. As smaller models are less expensive to evaluate, they may be deployed on less powerful hardware like a control unit of a cooking device. Knowledge distillation is based on the general idea that a small student model is trained under the supervision from a large teacher model. Black-box knowledge distillation, where only the teacher predictions are accessible, and white-box knowledge distillation, where the teacher parameters are available to use, may be used. Standard knowledge distillation objectives often minimize the approximated forward Kullback-Leibler divergence between the teacher and the student distribution.

In a preferred embodiment, the method for providing recipes for cooking to a user of a cooking device may comprise the following steps:
- Providing a trained recipe generator and/or training a recipe generator at a central entity, notably a server or a cloud service;
- Compressing the recipe generator at the central entity to generate a compressed version of the recipe generator;
- Sending the compressed version of the recipe generator from the central entity to a control unit of the cooking device;
- Receiving (and storing) the compressed version of the recipe generator at the control unit of the cooking device;
- Receiving a trigger from the user at the control unit;
- Generating, based on the trigger, at the control unit a new recipe using the compressed version of the recipe generator; and
- Providing the new recipe to the user by the control unit.

Like mentioned before, "trained" may also comprise "pre-trained". In many cases, especially at the beginning, a pre-trained recipe generator will be provided or a recipe generator will be pre-trained, especially based on recipes, which are readily available in the Internet. Afterwards, the recipe generator may be fine-tuned locally e.g. based on input received from the user. In this way, the recipe generator may be customized to the user's taste.

Accordingly, the invention may comprise a method, being executed on a central entity, comprising the following steps:
- Providing a trained recipe generator and/or training a recipe generator at the central entity, notably a server or a cloud service;
- Compressing the recipe generator at the central entity to generate a compressed version of the recipe generator; and
- Sending the compressed version of the recipe generator from the central entity to a control unit of a cooking device.

Likewise, the invention may comprise a method, being executed on a control unit of a cooking device, comprising the following steps:
- Receiving a compressed version of a recipe generator at the control unit of the cooking device;
- Receiving a trigger, especially a request, a query or a prompt, from the user at the control unit;
- Generating, based on the trigger, at the control unit a new recipe using the compressed version of the recipe generator; and
- Providing the new recipe to the user by the control unit.

In some embodiments, all of the above described methods may comprise the further step of receiving input from the user. The input may be e.g. received at the control unit. The input may especially comprise feedback relating to a new recipe. For example, a user may want to let the system know that he really liked the most recently recommended recipe or he may want to say "I do not believe that garlic and peaches taste well together". The input could also relate to some more practical issues like "the cake was difficult to extract from the baking pan". Or the input may comprise a complaint ("how many times have I told you that I have a gluten intolerance?") or a suggestion ("can I also do this with a gluten-free flour?"). In some embodiments, the input may comprise preferences. For example, the user may select from a list (e.g. presented on a touch-screen of the control unit) that he likes the Italian and French cuisine, but dislikes Asian-style food. Or he may select that he is a vegetarian or has a lactose intolerance. Of course, preferences may also be expressed with relation to a concretely recommended recipe ("thank you for the suggestion of Thai noodles, but I like pasta rather Italian-style"). In some embodiments, the input from the user is derived from observations of a camera, which observes the dish or food while being prepared and/or cooked and/or which observes the user while executing the recipe.

Based on the input learning may be performed. The learning may be performed, for example, on the central entity and/or on the control unit. The learning may use e.g. reinforcement learning and/or self-supervised learning. In some embodiments, contrastive self-supervised learning is used. The learning may comprise training of the recipe generator. Preferably, the learning leads to (proposed or actual) updates for the recipe generator. The updates may comprise updated parameters relating to a model (e.g. an artificial neural network) used within the recipe generator and/or they may comprise additional training data. For example, it is possible that a newly generated recipe, which was rated by the user as excellent, is added to the training data, such that future versions of the recipe generator can be trained also based on this excellent recipe. Furthermore, it may be possible that the user himself explicitly adds recipes to the training data. These recipes may have been conceived by the user e.g. based on human creativity or the user may have found the recipes somewhere in a cookbook or on the Internet.

Based on the input filtering may be performed. Especially, if the input comprises preferences it may be advantageous to transfer only a part of the recipe generator to the control unit. For example, if a user stated that he dislikes Asian food, the method can refrain from transferring a part of the recipe generator to the control unit, which relates to Asian cuisines. Or if the user has provided the input that he suffers from a gluten intolerance, all cake recipes using flours with gluten can be filtered out. In some embodiments, newly generated recipes may be filtered out and are not provided to the user if they erroneously do not fit to the preferences of the user. In this case, preferably a further new recipe is generated based on the trigger using the recipe generator. This may be repeated until a recipe has been generated, which fits to the user's preferences.

In some embodiments, the input and/or updates are sent from the control unit to the central entity and learning may be performed at the central entity. In addition or alternatively, the learning may be performed (locally) on the control unit. Possibly, the user may be asked under which conditions he wants to send his input and/or updates from the control unit to the central entity, wherein the input and/or updates are sent from the control unit to the central entity, when these conditions are met. In some embodiments, the method comprises the further steps of asking the user under which conditions he wants to send the input and/or updates from the control unit to the central entity, sending the input and/or updates from the control unit to the central entity, when these conditions are met, and adapting and/or training the recipe generator based on the input and/or updates at the central entity. This may serve the purpose of traffic optimization and/or the preservation of privacy.

The recipe generator, which is stored on the central entity, may be constantly improved as further input and/or updates are received and may be used to adapt and/or train the recipe generator. After some time, a new improved version of the recipe generator may be redistributed to the control unit. In some embodiments, the method may comprise the further steps of asking the user under which update conditions he wants to receive an updated version of the recipe generator from the central entity, sending these update conditions from the control unit to the central entity, receiving the update conditions at the central entity, sending an updated version of the recipe generator from the central entity to the control unit, when the update conditions are met, and receiving the updated version of the recipe generator at the control unit. Personal input and/or updates of the user may be kept and may be applied to the newly received recipe generator.

In preferred embodiments, the recipe generator is sent from the central entity to a plurality of control units. The recipe generator may be compressed. Each control unit may control one or more cooking devices. Preferably, input and/or updates are received from multiple control units at the central entity. Each input and/or update may relate to a certain user. Especially, each update may relate to the respective user of the cooking device being controlled by the respective control unit.

Some home appliance manufacturers sell their home appliances worldwide. Thus, there may be situations where the input and/or updates relate to users in very different regions of the world. In other words, one of the control units may be located in Germany, another in Brazil, a further one in Nigeria and yet a further one in China. The preferences of the users and their tastes may vary among the regions. Furthermore, even within one region, there may be some persons who prefer a different cuisine than the regional cuisine, for example, because they have a migration background or they simply like to be reminded of their last holidays. Moreover, in each region some persons eat meat and others are vegetarians. Thus, it may be advantageous to cluster the users into user groups. Accordingly, user-group-specific recipe generators may be provided and/or trained.

In some embodiments, the method comprises the further step of clustering, at the central entity, the inputs and/or updates based on characteristics of the respective user to whom the input and/or update relates and/or based on a choice of the user to which group he wants to belong. The characteristics may be automatically determined, e.g. they may be learned, and/or they may be provided by the user himself. For example, a user may want to choose to belong to a user group called "Vegetarians in Europe", "hot Asian-style", "gluten-free no matter what", "baking grandmas", "Fish@Hamburg" or "luxury on Sylt". Of course, a user may also be able to choose to belong to no group. He may be able to choose a recipe generator, which he wants to download, and can then locally train the downloaded recipe generator based on his own taste.

In some embodiments, the method comprises the further step of adapting and/or training, at the central entity, the recipe generator based on the clustered input and/or clustered updates, such that preferably user-group-specific recipe generators are generated. User-group-specific recipe generators may be, for example, generated by selectively evolving the training data sets based on the clustered input and/or clustered updates. This may mean that an excellently rated gluten-free baking recipe may be added only to the training data set of the user groups "gluten-free no matter what" and "baking grandmas". In this way, it may become possible to start with a pre-trained general-purpose recipe generator and to fork this recipe generator into many user-group-specific recipe generators by applying certain inputs and/or updates only to a certain copy of the original recipe generator.

In some embodiments, the method comprises the further step of sending the user-group-specific recipe generator from the central entity to the control units of the user group. On the control units, the user-group-specific recipe generator may be further trained to be adapted to the taste of the specific user.

In some embodiments, federated learning and/or collaborative learning may be used to improve the recipe generator. Federated learning and/or collaborative learning may provide the advantage that the recipe generator is trained via multiple independent sessions, each using its own data set. This approach may stand in contrast to traditional centralized machine learning techniques where local datasets are merged into one training session, as well as to approaches that assume that local data sets are identically distributed. Federated learning and/or collaborative learning may enable multiple actors to build a common, robust machine learning model without sharing data, thus addressing critical issues such as data privacy, data security, data access rights and access to heterogeneous data.

In some embodiments, the method may comprise a further step of compressing, at the central entity, the user-group-specific recipe generator to generate a compressed version of the user-group-specific recipe generator, wherein the step of sending the user-group-specific recipe generator is a step of sending the compressed version of the user-group-specific recipe generator from the central entity to the control units of the user group. The notion "recipe generator" may mean the recipe generator in any version. Depending on the context, the notion "recipe generator" may relate to an uncompressed recipe generator, a compressed recipe generator, an uncompressed user-group-specific recipe generator or a compressed user-group-specific recipe generator.

Under unfavorable conditions, a new recipe may violate some constraints. A human educated cook or chef may well be able to recognize immediately that a proposed recipe comprises a mistake, a bad idea or some kind of obstacle, which still needs to be overcome. However, a conventional large language model may still propose such a recipe, just because some words have a certain likelihood to follow a certain other word. Furthermore, especially when dealing with a food processor like Cookit, it may be advantageous to take technical limitations of the cooking device into account and/or to consider health and safety concerns. Therefore, some embodiments of the method may comprising the further step of verifying, at the control unit and/or the central entity, the new recipe using at least one element of an element group comprising a knowledge graph, an ontology, a reasoner and constraint optimization. Ontology-based reasoning relating to recipe technology (addressing questions such as "what are required functions of ingredients or groups of ingredients?", "which ingredients can or cannot be combined?" or "how can I substitute certain ingredients?") has been described e.g. in EP3958688 and EP3909479. The disclosure of EP3958688 and EP3909479 in their entirety is herewith included into the present disclosure by reference. In some embodiments, auxiliary data may be used to enhance the trigger, especially before the trigger is giving to the recipe generator. Accordingly, in some embodiments, the method may comprise a further step of enhancing the trigger with auxiliary data using e.g. a knowledge graph, an ontology, a database about available ingredients and/or knowledge about the available cooking devices. The auxiliary data may be stored, for example, in the form of a knowledge graph. In this way, the reliability of the generated recipes may be improved. In some embodiments, machine learning based constraint optimization methods may be used. For example, (e.g. in the domain of constrained classification) two-player methods that switch between optimizing the models parameters and Lagrange multipliers may be used, e.g. when a classifier has to be learned that respects side constraints such as an upper bound imposed on the False-Positive Rate. There is a great wealth of constraints that can be utilized by the two-player method and it can be applied to the domain of large language models.

In some embodiments, the method may comprise the further step of translating, at the control unit and/or the central entity, the new recipe into a sequence of steps taken from a list of predetermined actions, which are executable by the cooking device. During the translation, technical constraints of the cooking device may be respected and/or taken into account. This translation step my help to optimize the new recipe for a food processor like Cooklt, which in general has a limited number of executable instructions.

In some embodiments, the method further comprises the step of controlling by means of the control unit the cooking device according to the new recipe. The new recipe may be already in a form, which can be directly executed (e.g. without problems) by the cooking device. If the recipe is in a verbose form and/or in natural language, it still may contain passages like "bake at 200 degrees Celsius for 30 minutes", "preheat the oven", "cook at medium heat" or "constantly stir while cooking". Such instructions may be sent to the cooking device to control it, too.

In some embodiments, the control unit is adapted to provide the new recipe to the user by guiding the user through a cooking process relating to the new recipe and/or by furnishing recommendations and/or instructions to the user during the cooking process relating to the new recipe. For example, the control unit may tell the user to cut carrots into pieces and to add them to the pot or the control unit may instruct the user to peel potatos. In a preferred embodiment, the current cooking situation is determined. This can be done, for example, by using a camera, which is attached to the exhaust hood. Preferably, the recommendations and instructions are based on the determined current cooking situation. The method may give the user, for example, the advice to turn around a piece of meat, which has lain for 5 minutes in a hot pan on the same side.

In some embodiments, the control unit may be integrated into the cooking device. The Cooklt, for example, comprises its own processor, which may be understood as a part of the control unit. In other embodiments, the control unit may be separate from the cooking device, but is connected to the cooking device. The control unit may for instance comprises a computer, a mobile device, a tablet PC, a smartphone and/or a smart speaker. A smart phone, for example, may be sending instructions to the cooking device via a wireless connection like a Wi-Fi or Bluetooth connection. Accordingly, the smartphone may function as a control unit. In a preferred embodiment, the control unit comprises the smart kitchen dock of Bosch (a smart speaker) and a tablet PC, which is connected to the smart kitchen dock.

The control unit may be connected to an output unit or it may comprise an output unit. The output unit may comprises a display and/or a loudspeaker. Furthermore, the control unit may be connected to an input unit or it may comprise an input unit. The input unit may e.g. comprise a microphone, a camera, a keyboard, a mouse, a gesture sensor and/or a touch-sensitive surface. Cooklt, for example, comprises a touch-screen, on which recipe steps can be displayed and haptic inputs can be received. The smart kitchen dock of Bosch comprises a loudspeaker, such that audio instructions may be rendered to the user, and it comprises a microphone array for receiving triggers or instructions from the user. Some exhaust hoods comprise a camera to be able to observe the user while cooking. The control unit may be connected to the exhaust hood and use the observations of the camera to generate input from the user, which is later on used for learning.

According to a further aspect, the invention comprises a control unit for a cooking device. The cooking device may comprise e.g. a food processor (especially an automatic food processor), a blender, an oven, a cooktop, a microwave and/or an exhaust hood. The control unit comprises a storage unit for storing recipes and/or a compressed or uncompressed version of a recipe generator. The recipe generator may be user-group-specific. Preferably, the control unit comprises a communication unit for communicating with a central entity, which may be, for example, a server or a cloud service. The communication unit may be used to download recipes and/or the recipe generator (in a compressed or uncompressed version) to the control unit, which stores the downloaded data in the storage unit. Some recipes and/or a start version of the recipe generator may be pre-installed on the control unit. This may be especially advantageous if the control unit is integrated into a cooking device, especially into a food processor like Cooklt. Other techniques to transfer the recipes and/or the recipe generator to the control unit may be to connect the control unit to a USB-stick or some other storage device, on which the respective data is stored.

Furthermore, the control unit may comprise an input unit being adapted for receiving a trigger, especially a request, a query or a prompt, from a user of the cooking device. The input unit may comprise, for example, a microphone, a camera, a keyboard, a mouse, a gesture sensor and/or a touch-sensitive display. In addition, the control unit may comprise a processor being adapted to ask the central entity for a new recipe based on the trigger and/or for generating, based on the trigger, a new recipe using the recipe generator being stored in the storage unit of the control unit. Also an output unit for providing the new recipe to the user may be part of the control unit. In this respect, already being able to steer the cooking device according to the recipe may be understood as outputting the recipe. Accordingly, the output unit may comprise a steering unit for controlling the cooking device.

According to a further aspect, the invention comprises a central entity. The central entity may be or comprise, for example, a server or a cloud service. The central entity comprises a storage unit for storing a trained recipe generator; a communication unit for communicating with a control unit of a cooking device; and a processor. The processor may be adapted for generating a new recipe based on a trigger, especially a request, a query or a prompt, received from the control unit and based on the stored recipe generator. In addition or alternatively, the processor may be adapted for sending the recipe generator from the central entity to the control unit of the cooking device using the communication unit.

According to yet a further aspect, the invention comprises a system for providing recipes for cooking to a user of a cooking device. The system comprises a cooking device, the above described control unit of the cooking device and the above described central entity, wherein the cooking device comprises the control unit or is connected to the control unit. The connection may be e.g. based on Wi-Fi, Bluetooth, Ethernet and/or DSL and protocols like TCP and/or the Internet Protocol and/or standards like MATTER may be used. The cooking device may comprise e.g. a food processor, a blender, an oven, a cooktop, a microwave and/or an exhaust hood.

The method may be implemented in software. Thus, according to a further aspect, the invention comprises a data processing program product comprising instructions which, when the program is executed by a data processing apparatus, cause the data processing apparatus to carry out the above-described method. Such a data processing program product may be offered, for example, as a downloadable software package.

The invention has been described with regard to a method, a data processing program product, a control unit, a central entity and a system. If not explicitly stated otherwise, the features and advantages, which have been described with regard to one claim category (e.g. method or data processing program product), may be applied in analogy to all other claim categories (e.g. the control unit, the central entity and the system) and vice versa. This may mean especially that certain units of the mentioned apparatuses or the apparatuses themselves may be adapted to carry out the steps of the method. This adaptation may be carried out, for example, by downloading and installing the data processing program product. Accordingly, the control unit, for example, may comprise a button that issues a trigger, when it is pressed. The processor of the central entity may be adapted for compressing the recipe generator to generate a compressed version of the recipe generator. The communication unit of the central entity may be adapted to send the recipe generator in any form (i.e. compressed or uncompressed and general-purpose or user-group-specific) from the central entity to the control unit of the cooking device. In some embodiments, of course, the system comprises multiple control units and multiple cooking devices. The processor of the central entity may be adapted for clustering the input and/or updates received from the control units based on characteristics of the respective user to whom the input and/or update relates and/or based on a choice of the user to which group he wants to belong. The storage unit of the central entity may be adapted to store multiple user-group-specific recipe generators. The processors of the control units and/or the processor of the central entity may be adapted for verifying the new recipe using at least one element of an element group comprising a knowledge graph, an ontology, a reasoner and constraint optimization. Furthermore, these processors may be adapted for translating the new recipe into a sequence of steps taken from a list of predetermined actions, which are executable by the cooking device. Likewise, the processor of the control unit may be adapted for controlling the cooking device according to the new recipe.

Further details and advantages of non-restrictive embodiments of the invention will be described in the following with regard to the figures, which show:
- Fig. 1: one embodiment of a control unit according to the invention;
- Fig. 2: an example of a cooking device having an integrated control unit;
- Fig. 3: an example of a control unit, which is separate from the cooking device;
- Fig. 4: a further example of a control unit, which is separate from the cooking devices;
- Fig. 5: one embodiment of a central entity according to the invention;
- Fig. 6: one embodiment of a method according to the invention;
- Fig. 7: a further embodiment of a method according to the invention;
- Fig. 8: an illustration relating to language-to-language learning, language-to-tabular learning and the step of translating a new recipe into a sequence of steps;
- Fig. 9: an example of enhancing the trigger with auxiliary data; and
- Fig. 10: an embodiment of a system according to the invention.

In the following, identical elements or elements, which have a similar function, may be identified by the same reference sign.

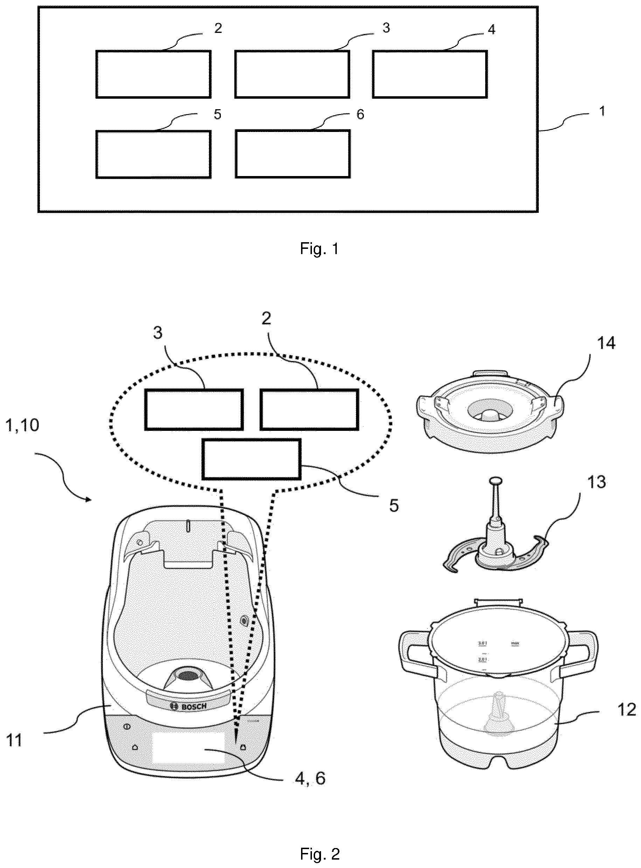

Fig. 1 shows an embodiment of a control unit according to the invention. The purpose of the control unit may be to control a cooking device, such as a food processor, a blender, an oven, a cooktop, a microwave and/or an exhaust hood. The control unit 1 comprises a storage unit 2. In this storage unit 2 e.g. new recipes and/or a recipe generator may be stored. The recipe generator may be in any form and any version. It may be e.g. compressed or uncompressed. It may be a freshly downloaded general-purpose recipe generator or a user-group-specific recipe generator. The recipe generator may be even user-specific if it has been fine-tuned to the taste of the user. The shown embodiment of the control unit 1 comprises a communication unit 3 for communicating with a central entity. The communication unit 3 may communicate, for example, based on Wi-Fi, Bluetooth, Ethernet or DSL. It may use the Internet protocol and/or may be adapted to communicate in accordance with the MATTER-standard of the connectivity standards alliance (CSA). Using the communication unit 3 recipes and/or a recipe generator may be downloaded from the central entity, such as a server in the Internet or a cloud service.

The control unit 1 comprises an input unit 4. The input unit 4 may comprise, for example, a button, which can be pressed to generate a trigger, which instructs the recipe generator to generate a new recipe. It may furthermore comprise one or more microphones, a keyboard, a touch-display, a gesture sensor and/or a mouse to allow the user to input a trigger. Especially if the input unit 4 comprises a microphone or a keyboard, the trigger may comprise a request, a query or a prompt, which may instruct the recipe generator to generate a new recipe having certain characteristics. The control unit 1 furthermore comprises a processor 5. The processor 5 may be adapted to ask the central entity for a new recipe based on the trigger. This is especially advantageous if the control unit 1 does not store a recipe generator itself. The process 5 may also be adapted for generating, based on the trigger, a new recipe using a recipe generator being stored in the storage unit 2. Additionally, the control unit 1 comprises an output unit 6. The output unit 6 may comprise, for example, a display (especially a touch-sensitive display), a loudspeaker, a steering unit to steer the cooking device, LEDs and/or a beeper.

Fig. 2 illustrates an example of a cooking device having an integrated control unit. The shown cooking device 10 is the Cooklt, an automatic food processor offered by Bosch. The Cooklt comprises its own mini-computer, which can function as a control unit 1. Accordingly, the cooking device 10 comprises a control unit 1 with a storage unit 2, a communication unit 3 and a processor 5. It furthermore comprises a touch-sensitive display, which forms at the same time an input unit 4 and an output unit 6. The cooking device 10 has a main housing 11, which comprises, e.g., a motor. A pot 12 may be positioned in the main housing 11 and a tool 13 may be mounted to a driveshaft of the pot 12, such that the tool 13 may be driven by the motor of the main housing 11. The pot 12 may be closed with a lid 14.

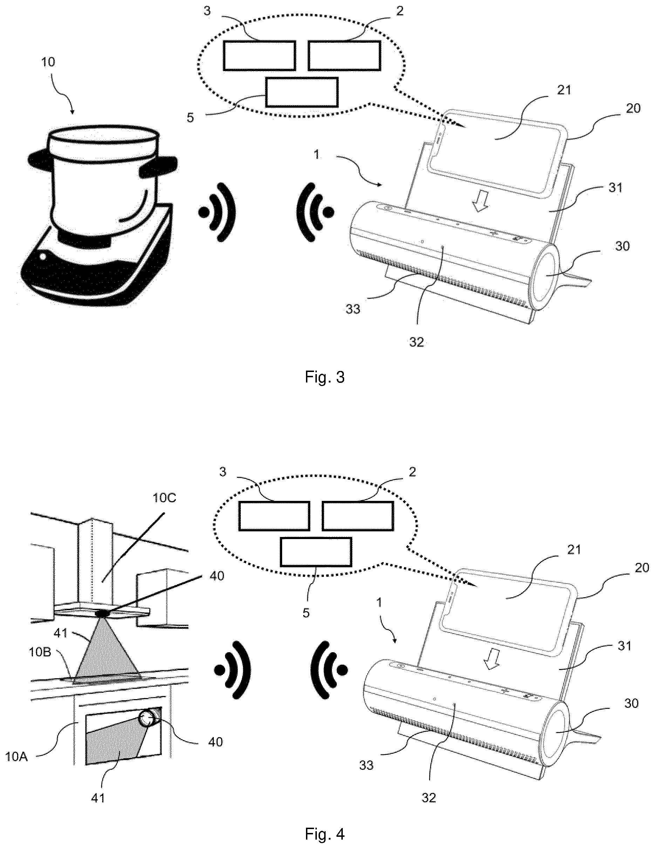

Fig. 3 shows an example of a control unit 1, which is separate from the cooking device 10. The cooking device 10 as illustrated in figure 3 is again a food processor. However, this time the cooking device 10 does not comprise a touch-sensitive display and may be rather dumb. The cooking device 10 is wirelessly connected to a control unit 1, which controls the cooking device 10 and comprises a smartphone 20 and a Smart Kitchen Dock 30. The smartphone 20 has a touch-sensitive display 21 that may function as an input unit and an output unit. Furthermore, the smartphone 20 comprises a storage unit 2, a communication unit 3 and a processor 5. The smartphone 20 is positioned on and wirelessly connected to a Smart Kitchen Dock 30. The Smart Kitchen Dock offered by Bosch has been described, e.g., in EP4086727 and EP4142303. The Smart Kitchen Dock 30 comprises a backrest 31 (to hold and support the smartphone 20), a microphone 32, a loudspeaker 33 and a gesture sensor (not shown). The Smart Kitchen Dock 30 may furthermore comprise a storage unit, a communication unit and a processor. The Smart Kitchen Dock 30 works like a smart speaker, such as, e.g., Amazon's Alexa Echo. Instructions may be given from the smartphone 20 to the Smart Kitchen Dock 30 and vice versa. The configuration shown in figure 3 may allow a user to provide a trigger to the control unit 1. For example, he might say "Alexa, please give me a recipe to bake a cake with gluten-free flour". This instruction may be captured by the microphone 32 and the Smart Kitchen Dock 30 may perform speech recognition using its communication unit and a speech recognition service in the cloud. Once the instruction has been transformed into text and/or a user intent, it may be given to a recipe app, which is installed on the smartphone 20. The recipe app may then trigger the recipe generator to generate a new recipe, which is afterwards provided by the recipe app to the user. In this way, the control unit 1 shown in figure 3 may work as a smart kitchen assistant, which guides the user step-by-step through a cooking process relating to a new recipe. The recipe app may send instructions directly to the cooking device 10 to control its operation according to the new recipe. This may support the user exactly at the step of the recipe, which he is currently working on. If, e.g., the recipe says "constantly stir", the recipe app may ask the cooking device 10 whether a suitable tool 13 is inserted in the pot 12 of the cooking device 10 and, if yes, instruct the cooking device 10 to turn its motor on to constantly drive the tool 13.

Fig. 4 shows a further example, in which the control unit 1 is separate from the cooking device 10. The control unit 1 is the same as in Fig. 3, but the cooking device 10 this time comprises an oven 10A, a cooktop 10B and an exhaust hood 10C. The oven 10A comprises a camera 40 with a pre-defined field of vision 41. The camera 40 may recognize a dish, which is inserted into the oven 10A, and it may observe the progress the dish is making during the cooking process. Based on these observations, input may be derived, which may be used for learning. In this respect, the input of the cameras 40 of the user may be considered as "input from the user". What the user does on the cooktop 10A, is captured by a further camera 40, which is integrated into the exhaust hood 10C. Thus, the camera 40 may observe at which recipe step the user currently is. The camera 40 may scrutinize, for example, for how long a piece of meat is already in a pan. It may observe at which specific steps the user has particular difficulties. These difficulties may be caused by a lack of skill of the user, such that recommendations and/or instructions may be helpful based on the current cooking situation. Especially when such observations as "input from the user" are aggregated at a central entity, the overall system may recognize that at a certain step of a recipe further written instructions may be helpful and may add these instructions to the recipe. It is also possible that the central entity recognizes that a certain user group (e.g. like elderly people) have problems or needs, which other user groups do not have. Then user-group-specific instructions may be added to a certain recipe. Another example is that in a certain region the users know well how to peel asparagus or prepare a sweet-sour sauce, while in other regions the users do not. Then it may make sense to give further explanations to the users in a region where the users in most cases are oblivious to the needed skills. Furthermore, the control unit 1 may dynamically control the cooking device 10 based on the current cooking situation. For example, the control unit 1 may recognize that a piece of meat threatens to scorch, because the heat is too high or the user currently is busy with other tasks, and may then instruct the cooktop 10B to turn the heat down. In this way, the control unit 1 may support the user while cooking by relieving the user from routine tasks or by warning him about current threats or unexpected situations.

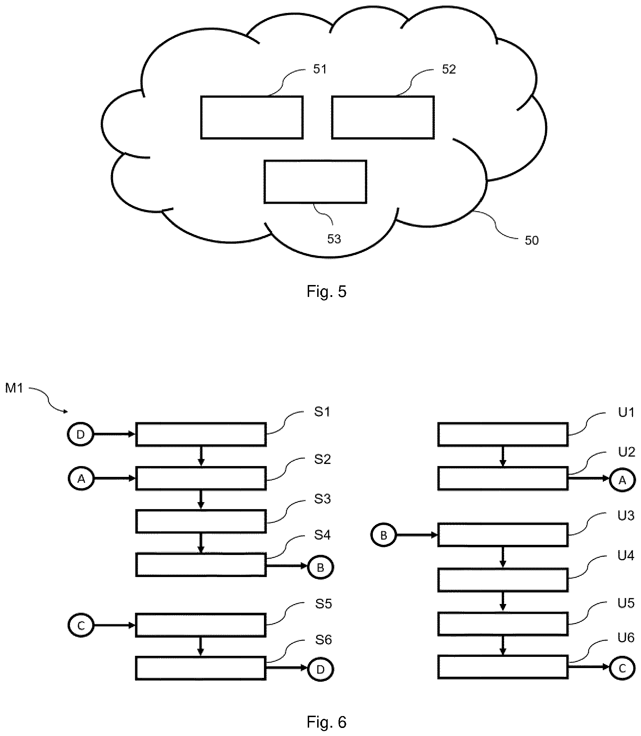

Fig. 5 shows an embodiment of a central entity according to the invention. The central entity may be, for example, a server or a service, which is, e.g., provided by a cloud infrastructure. The central entity 50 comprises a storage unit 51. The storage unit 51 may store one or more trained recipe generators. At the beginning of the learning process, the stored recipe generator may only be pre-trained. The more inputs and/or updates are received from control units 1 in the field the better trained the recipe generator may become. Moreover, the storage unit 51 may store many recipe generators, wherein preferably each recipe generator is optimized for a certain user group. In addition, the central entity 50 comprises a communication unit 52. The communication unit 52 may be used by the central entity 50 to communicate with many control units 1. Using the communication unit 52 the central entity 50 may send, e.g., recipes and/or recipe generators in a compressed or uncompressed version to the control units 1. On the other hand, triggers and/or input, especially input from the users, and/or updates may be received from the control units 1 using the communication unit 52.

Furthermore, the central entity 50 comprises a processor 53. The processor 53 may be adapted to perform many tasks, such as
- training a recipe generator, especially adapting and/or training a recipe generator based on input and/or updates;
- language-to-language learning and/or language-to-tabular learning;
- performing learning, especially reinforcement learning and/or self-supervised learning;
- clustering inputs and/or updates based on characteristics of the respective user to whom the input and/or update relates and/or based on a choice of the user to which group he wants to belong;
- adapting and/or training the recipe generator based on clustered inputs and/or clustered updates, such that preferably user-group-specific recipe generators are generated;
- generating, based on a trigger, a new recipe using the recipe generator;
- sending a recipe generator to a control unit of the cooking device using the communication unit;
- compressing the recipe generator to generate a compressed version of the recipe generator;
- performing knowledge distillation;
- verifying a new recipe using at least one element of an element group comprising a knowledge graph, an ontology, a reasoner and constraint optimization; and
- translating a new recipe into a sequence of steps taken from a list of predetermined actions, which are executable by the cooking device, wherein during the translation preferably technical constraints of the cooking device are respected.

Fig. 6 shows one embodiment of a method according to the invention. On the left side, the steps of method M1 are depicted, which are performed on the central entity. Their reference signs start with S (like server-side). On the right side, the steps of method M1 are illustrated, which are performed on the control unit. Their reference signs start with U (like user-side). In step S1, a trained recipe generator is provided or a recipe generator is trained. In step U1, a trigger is received from the user. The user may, e.g., press a button or give his Smart Kitchen Dock the instruction "Alexa, provide me with a Chinese recipe for duck in a sweet-sour sauce". The trigger is sent to the central entity in step U2. The circled A means that the method M1 continues with step S2, in which the trigger is received at the central entity. In step S3, a new recipe is generated based on the trigger using the recipe generator. The new recipe is then sent to the control unit in step S4. The circled B means that the method M1 continues with step U3, in which the new recipe is received on the control unit.

In step U4, the new recipe is provided to the user. This may mean, for example, that the user is guided step-by-step through the recipe and/or that the cooking device is automatically controlled to perform the necessary steps to carry out the recipe. In step U5, input from the user is received. This may mean, for example, that the user was observed while cooking and conclusions are drawn with regard to the new recipe. Thus, input may be given by the user through his cooking behavior. The user may also provide input more explicitly, for example, by rating the new recipe or by typing in preferences. In step U6, the input is sent from the control unit to the central entity. Like illustrated by the circled C, the method M1 continues with step S5, in which the input is received on the central entity. In step S6, learning is performed based on the input, such that the recipe generator, which is provided in step S1, is adapted and/or trained based on the input. This continuous improvement processes is indicated by the circled D.

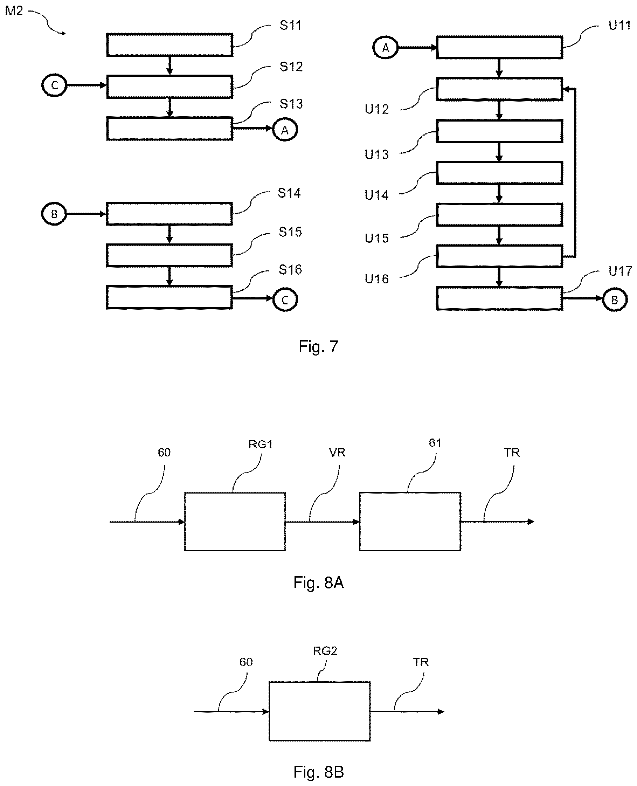

A further embodiment of a method according to the invention is illustrated in Fig. 7. Again the steps of the method M2, which are performed on the central entity are shown on the left side and possess a reference sign starting with "S". Likewise, the steps of the method M2, which are carried out on the control unit, are shown on the right side and their reference sign starts with "U". Jumps and branches are again illustrated with a circled letter. In step S11, a trained recipe generator is provided or a recipe generator is trained. In step S12, the recipe generator is compressed to generate a compressed version of the recipe generator. Afterwards, in step S13, the compressed recipe generator is sent to the control unit, where it is received and stored in step U11.

In step U12, a trigger is received from the user of the control unit and/or the cooking device. For example, the user may scroll through a recipe list on the touch-sensitive display of Cooklt and press on an item called "surprise me with a new recipe". In step U 13, based on the trigger, a new recipe is generated using the recipe generator, which is stored within the control unit. In step U14, the new recipe is provided to the user. For example, the new recipe may be rendered on the display of Cooklt. Then in step U15, input is received from the user. For example, the user may click on the touch-sensitive display whether he likes the new recipe or not. Also a rating of the new recipe, e.g., on a scale from 1 (very bad) to 10 (very good) may be input. Based on the input, learning is performed on the control unit in step U16, such that updates, especially updates to the recipe generator, are determined. Ratings of recipes, for example, may be incorporated into the fine-tuning process as sampling weights for the corresponding recipe. The learning, of course, may comprise that the local recipe generator stored on the control unit is adapted and/or trained. The user may have been asked under which conditions he wants to send the input and/or updates from the control unit to the central entity. If these conditions are not yet met, the method M2 simply jumps back to the step U12 and waits for a new trigger. When the conditions are met, the input and/or updates are sent from the control unit to the central entity, where they are received in step S14 (like indicated by the circled letter B). If the conditions are chosen to be "false", the user never wants to send any input and/or updates from the control unit to the central entity (e.g. for privacy reasons). In this case, the local recipe generator is only locally trained and/or adapted, such that the recipe generator increasingly well is able to anticipate the specific taste of the user.

In step 15, the inputs and/or updates received from many control units are clustered. The clustering may be performed, for example, based on certain characteristics of the users to whom the respective input and/or update relates. For example, all inputs and/or updates received from a region A may be clustered in a first group and all inputs and/or updates received from a region B may be clustered in a second group. It is also possible that the respective users have chosen themselves to which group they want to belong. For example, a user may have chosen that he wants to belong to the group "baking grandmas". Accordingly, his input and/or updates may be used to adapt and/or train the recipe generator, which is specific for this group. The adaptation and/or training is performed in step S16. It may be based on the clustered inputs and/or the clustered updates, such that preferably user-group-specific recipe generators are generated. These user-group-specific recipe generators may be compressed again in step S12 (like indicated by the circled letter C). In general, input may also be understood as a plural. Thus, input may comprise many inputs.

Fig. 8A and Fig. 8B illustrate the relation between language-to-language learning, language-to-tabular learning and the step of translating a new recipe into a sequence of steps. In Fig. 8A a trigger, especially a prompt 60, is given to the recipe generator RG1, which is adapted to output verbose recipes. An example for a prompt 60 is "Alexa, give me a recipe for a marble cake". The recipe generator RG1 generates a new verbose recipe VR (e.g. a recipe in natural language as known from conventional cookbooks). The verbose recipe VR is translated by the translation unit 61 into a sequence of steps taken from a list of predetermined actions, which are executable by the cooking device, wherein during the translation preferably technical constraints of the cooking device are respected. This sequence of steps can be understood as a tabularized recipe TR. Fig. 8B illustrates a recipe generator RG2, which is adapted to output tabularized recipes TR directly. It takes as an input again the prompt 60. However, this time no new verbose recipe is generated. Instead, the recipe generator RG2 has been trained to directly output a tabularized recipe TR, which can be directly executed by the cooking device.

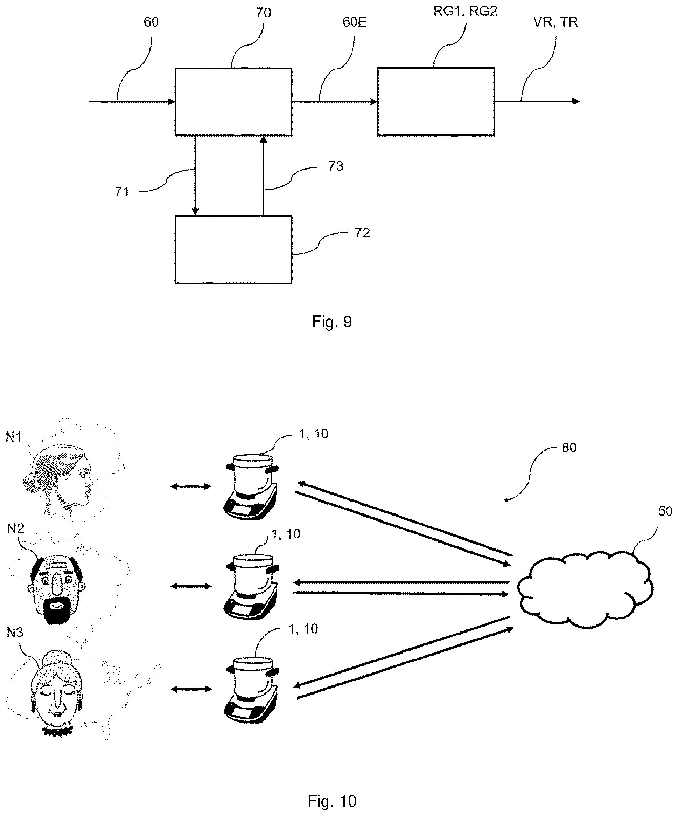

Fig. 9 shows an example of enhancing a trigger with auxiliary data. A trigger enhancer 70 receives a prompt 60. For example, the prompt may be "Alexa, I would like to bake a fruitcake". The trigger enhancer 70 sends a smart search request 71 to a knowledge repository 72. The knowledge repository may comprise, for example, a knowledge graph and/or an ontology, which formalize the knowledge relating to cooking. Furthermore, the knowledge repository 72 may be aware of the ingredients, which are available at home. Accordingly, the knowledge repository 72 may perform smart stock management. In addition, the knowledge repository 72 may know, which cooking devices are available for the user and which capabilities and tools the cooking devices have. For example, the knowledge repository 72 may know that currently only dry fruits and rye flour are available at the home of the user and generates auxiliary data based on this knowledge. The auxiliary data 73 may be given back to the trigger enhancer 70, which generates an enhanced prompt 60E. For example, the enhanced prompt 60E may be "Alexa, I would like to bake a fruitcake based on dry fruits and rye flour." This enhanced prompt 60E is given to the recipe generator RG1 or RG2, which generates a verbose recipe VR or a tabularized recipe TR.

Fig. 10 shows an embodiment of a system according to the invention. The system 80 comprises multiple cooking devices 10 each having its own integrated control unit 1. Each cooking device 10 with its control unit 1 may be located in a completely different region. The user N1, for example, may be using her cooking device in Germany, while the user N2 is domiciled in Brazil and the user N3 is located in the USA. Of course, the three users N1, N2 and N3 may have very different tastes and preferences. The system 80 furthermore comprises a central entity 50. The central entity 50 may send recipes and/or recipe generators to the combined cooking devices 10 and control units 1 and may receive input and/or updates from them. As the users N1, N2 and N3 are very diverse, it is preferred that the inputs and/or updates are clustered and user-group-specific recipe generators are generated.

The description of the figures is to be understood in an illustrative and not in a restrictive sense. Many modifications may be made to the embodiments described with regard to the figures without departing from the scope of the invention as defined by the appended claims.

### Reference signs

- 1: control unit
- 2: storage unit
- 3: communication unit
- 4: input unit
- 5: processor
- 6: output unit
- 10: cooking device
- 10A: oven
- 10B: cooktop
- 10C: exhaust hood
- 11: main housing
- 12: pot
- 13: tool
- 14: lid
- 20: smartphone
- 21: touch-sensitive display
- 30: Smart Kitchen Dock
- 31: backrest
- 32: microphone
- 33: loudspeaker
- 40: camera
- 41: field of vision
- 50: central entity
- 51: storage unit
- 52: communication unit
- 53: processor
- 60: trigger (prompt)
- 60E: enhanced trigger (prompt)
- 61: translation unit
- 70: trigger enhancer
- 71: search request
- 72: knowledge repository
- 73: auxiliary data
- 80: system
- M1-M2: method
- N1-N3: user
- RG1: recipe generator outputting verbose recipes
- RG2: recipe generator outputting tabularized recipes
- TR: tabularized recipe
- VR: verbose recipe

- -----: M1 -----
- S1: providing a trained recipe generator or training a recipe generator
- S2: receiving the trigger at the central entity
- S3: generating, based on the trigger, a new recipe using the recipe generator
- S4: sending the new recipe from the central entity to the control unit
- S5: receiving input from the user at the central entity
- S6: performing learning based on the input
- U1: receiving a trigger from the user at the control unit
- U2: sending the trigger from the control unit to the central entity
- U3: receiving the new recipe at the control unit
- U4: providing the new recipe to the user
- U5: receiving input from the user
- U6: sending the input from the control unit to the central entity

- -----: M2 -----
- S11: providing a trained recipe generator or training a recipe generator
- S12: compressing the recipe generator to generate a compressed recipe generator
- S13: sending the compressed recipe generator to the control unit
- S14: receiving input and/or updates from the control unit
- S15: clustering the input and/or updates
- S16: adapting and/or training the recipe generator
- U11: receiving and storing the compressed recipe generator at the control unit
- U12: receiving a trigger from the user
- U13: generating, based on the trigger, a new recipe using the recipe generator
- U14: providing the new recipe to the user
- U15: receiving input from the user
- U16: performing learning based on the input, such that updates are determined
- U17: sending the input and/or updates from the control unit to the central entity

## Claims

1. Method (M1, M2), especially computer-implemented method, for providing recipes (VR, TR) for cooking to a user (N1, N2, N3) of a cooking device (10), wherein the cooking device preferably comprises a food processor, a blender, an oven (10A), a cooktop (10B), a microwave, and/or an exhaust hood (10C), the method comprising the steps of
- Providing a trained recipe generator and/or training a recipe generator (S1, S11);
- Receiving a trigger, especially a request, a query or a prompt, from the user of the cooking device (U1, U11);
- Generating, based on the trigger, a new recipe using the recipe generator (S3, U13); and
- Providing the new recipe to the user (U4, U14).

2. Method (M1, M2) according to claim 1, wherein the recipe generator (RG1, RG2) works based on generative artificial intelligence and preferably comprises a foundational model, especially a large language model.

3. Method (M1, M2) according to at least one of the preceding claims, wherein the recipe generator (RG1, RG2) has been trained and/or is trained using language-to-language learning and/or language-to-tabular learning.

4. Method (M1) according to at least one of the preceding claims, wherein
- the trained recipe generator is provided and/or trained at a central entity (50), notably a server or a cloud service;
- the trigger (60, 60E) is received from the user at a control unit (1) of the cooking device (U1);
- the trigger (60, 60E) is sent from the control unit (1) to the central entity (U2), where the new recipe (VR, TR) is generated, based on the trigger, using the recipe generator (S3); and
- the new recipe (VR, TR) is sent from the central entity to the control unit (S4), wherein the new recipe is provided to the user by the control unit (U4).

5. Method (M2) according to one of the claims 1 to 3, wherein
- the trained recipe generator is provided and/or trained at a central entity (50), notably a server or a cloud service;
- the recipe generator is sent from the central entity to a control unit of the cooking device (S13);
- the trigger is received from the user at the control unit (U12);
- the new recipe is generated, by the control unit, based on the trigger using the recipe generator (U13); and
- the new recipe is provided to the user by the control unit (U14).

6. Method (M2) according to claim 5, wherein the method comprises the further step of
- Compressing (S12) the recipe generator at the central entity to generate a compressed version of the recipe generator, wherein the compressed version of the recipe generator is sent (S13) from the central entity to the control unit of the cooking device;
- wherein the recipe generator is preferably compressed using knowledge distillation, wherein the recipe generator is a teacher model and the compressed version of the recipe generator is a student model.

7. Method (M1, M2) according to at least one of the preceding claims, comprising the further steps of
- receiving input from the user (U5, U15), especially feedback relating to the new recipe, at the control unit; and
- performing learning (S6, U16) based on the input, especially reinforcement learning and/or self-supervised learning, such that updates are determined.

8. Method (M1, M2) according to claim 7, wherein
- the input and/or updates are sent from the control unit to the central entity (U6, U17) and learning is performed at the central entity (S6) and/or
- learning is performed on the control unit (U16),
- wherein the following further steps are preferably performed
- asking the user under which conditions he wants to send the input and/or updates from the control unit to the central entity,
- sending the input and/or updates from the control unit to the central entity, when these conditions are met, and
- adapting and/or training the recipe generator based on the input and/or updates at the central entity.

9. Method (M2) according to at least one of the preceding claims, especially claim 8, wherein the recipe generator is preferably sent from the central entity (50) to a plurality of control units (1) and input and/or updates from multiple control units are received at the central entity, wherein each input and/or update relates to the respective user (N1, N2, N3) of the cooking device being controlled by the respective control unit, wherein the method comprises the further steps of
- Clustering (S15), at the central entity, the input and/or updates based on characteristics of the respective user to whom the input and/or update relates and/or based on a choice of the user to which group he wants to belong;
- Adapting and/or training (S16), at the central entity, the recipe generator based on the clustered input and/or clustered updates, such that preferably user-group-specific recipe generators are generated; and
- Preferably sending (S13) the user-group-specific recipe generator from the central entity to the control units of the user group.

10. Method (M 1, M2) according to at least one of the preceding claims, comprising the further step of verifying, at the control unit and/or the central entity, the new recipe using at least one element of an element group comprising a knowledge graph, an ontology, a reasoner and constraint optimization.

11. Method (M1, M2) according to at least one of the preceding claims, comprising the further step of translating, at the control unit and/or the central entity, the new recipe into a sequence of steps taken from a list of predetermined actions, which are executable by the cooking device, wherein during the translation preferably technical constraints of the cooking device are respected.

12. Method (M1, M2) according to at least one of the preceding claims, wherein the method further comprises the step of controlling by means of the control unit the cooking device according to the new recipe, wherein the control unit is preferably adapted to provide the new recipe to the user
- by guiding the user through a cooking process relating to the new recipe and/or
- by furnishing recommendations and/or instructions to the user during the cooking process relating to the new recipe, preferably based on a determined current cooking situation.

13. Control unit (1) for a cooking device (10), wherein the cooking device preferably comprises a food processor, a blender, an oven (10A), a cooktop (10B), a microwave and/or an exhaust hood (10C), the control unit comprising
- a storage unit (2) for storing recipes and/or a compressed or uncompressed version of a recipe generator;
- preferably a communication unit (3) for communicating with a central entity, preferably a server or a cloud service;
- an input unit (4) being adapted for receiving a trigger, especially a request, a query or a prompt, from a user of the cooking device;
- a processor (5) being adapted to ask the central entity for a new recipe based on the trigger and/or for generating, based on the trigger, a new recipe using a recipe generator being stored in the storage unit of the control unit; and
- an output unit (6) for providing the new recipe to the user.

14. Central entity (50), preferably a server or a cloud service, comprising
- a storage unit (51) for storing a trained recipe generator;
- a communication unit (52) for communicating with a control unit of a cooking device; and
- a processor (53)
a) for generating a new recipe based on a trigger, especially a request, a query or a prompt, received from the control unit and based on the stored recipe generator and/or
b) for sending the recipe generator from the central entity to the control unit of the cooking device using the communication unit.

15. System (80) for providing recipes for cooking to a user of a cooking device, comprising
- a cooking device (10), wherein the cooking device preferably comprises a food processor, a blender, an oven (10A), a cooktop (10B), a microwave and/or an exhaust hood (10C);
- a control unit (1) of the cooking device according to claim 13; and
- a central entity (50) according to claim 14;
- wherein the control unit (1) is integrated into the cooking device or is separate from the cooking device, but connected to the cooking device and preferably comprises a computer, a mobile device, a tablet PC, a smartphone (20) and/or a smart speaker (30).

16. A data processing program product comprising instructions which, when the program is executed by a data processing apparatus, cause the data processing apparatus to carry out the method (M1, M2) according to at least one of the claims 1 to 12.

## Amended claims

### Amended claims in accordance with Rule 137(2) EPC.

1. Method (M1, M2), especially computer-implemented method, for providing recipes (VR, TR) for cooking to a user (N1, N2, N3) of a cooking device (10), the method comprising the steps of
- Providing a trained recipe generator and/or training a recipe generator (S1, S11) at a central entity (50), notably a server or a cloud service;
- Receiving a trigger from the user of the cooking device (U1, U11);
- Generating, based on the trigger, a new recipe using the recipe generator (S3, U13); and
- Providing the new recipe to the user (U4, U14);
**characterized in that**
- the recipe generator (RG1, RG2) comprises a foundational model, especially a large language model;
- the recipe generator is sent from the central entity to a control unit of the cooking device (S13);
- the trigger is received from the user at the control unit (U12);
- the new recipe is generated, by the control unit, based on the trigger using the recipe generator (U13); and
- the new recipe is provided to the user by the control unit (U14).

2. Method (M1, M2) according to claim 1, wherein the cooking device comprises a food processor, a blender, an oven (10A), a cooktop (10B), a microwave, and/or an exhaust hood (10C).

3. Method (M1, M2) according to at least one of the preceding claims, wherein the recipe generator (RG1, RG2) has been trained and/or is trained using language-to-language learning and/or language-to-tabular learning.

4. Method (M1) according to at least one of the preceding claims, wherein the trigger comprises a request, a query or a prompt.

5. Method (M2) according to at least one of the preceding claims , wherein the method comprises the further step of
- Compressing (S12) the recipe generator at the central entity to generate a compressed version of the recipe generator, wherein the compressed version of the recipe generator is sent (S13) from the central entity to the control unit of the cooking device;
- wherein the recipe generator is preferably compressed using knowledge distillation, wherein the recipe generator is a teacher model and the compressed version of the recipe generator is a student model.

6. Method (M1, M2) according to at least one of the preceding claims, comprising the further steps of
- receiving input from the user (U5, U15), especially feedback relating to the new recipe, at the control unit; and
- performing learning (S6, U16) based on the input, especially reinforcement learning and/or self-supervised learning, such that updates are determined.

7. Method (M1, M2) according to claim 6, wherein
- the input and/or updates are sent from the control unit to the central entity (U6, U17) and learning is performed at the central entity (S6) and/or
- learning is performed on the control unit (U16),
- wherein the following further steps are preferably performed
- asking the user under which conditions he wants to send the input and/or updates from the control unit to the central entity,
- sending the input and/or updates from the control unit to the central entity, when these conditions are met, and
- adapting and/or training the recipe generator based on the input and/or updates at the central entity.

8. Method (M2) according to at least one of the preceding claims, especially claim 7, wherein the recipe generator is sent from the central entity (50) to a plurality of control units (1) and input and/or updates from multiple control units are received at the central entity, wherein each input and/or update relates to the respective user (N1, N2, N3) of the cooking device being controlled by the respective control unit, wherein the method comprises the further steps of
- Clustering (S15), at the central entity, the input and/or updates based on characteristics of the respective user to whom the input and/or update relates and/or based on a choice of the user to which group he wants to belong;
- Adapting and/or training (S16), at the central entity, the recipe generator based on the clustered input and/or clustered updates, such that preferably user-group-specific recipe generators are generated; and
- Preferably sending (S13) the user-group-specific recipe generator from the central entity to the control units of the user group.

9. Method (M1, M2) according to at least one of the preceding claims, comprising the further step of verifying, at the control unit and/or the central entity, the new recipe using at least one element of an element group comprising a knowledge graph, an ontology, a reasoner and constraint optimization.

10. Method (M1, M2) according to at least one of the preceding claims, comprising the further step of translating, at the control unit and/or the central entity, the new recipe into a sequence of steps taken from a list of predetermined actions, which are executable by the cooking device, wherein during the translation preferably technical constraints of the cooking device are respected.

11. Method (M1, M2) according to at least one of the preceding claims, wherein the method further comprises the step of controlling by means of the control unit the cooking device according to the new recipe, wherein the control unit is preferably adapted to provide the new recipe to the user
- by guiding the user through a cooking process relating to the new recipe and/or
- by furnishing recommendations and/or instructions to the user during the cooking process relating to the new recipe, preferably based on a determined current cooking situation.

12. Control unit (1) for a cooking device (10), the control unit comprising
- a storage unit (2) for storing a compressed or uncompressed version of a recipe generator, wherein the recipe generator (RG1, RG2) comprises a foundational model, especially a large language model;
- a communication unit (3) for communicating with a central entity, preferably a server or a cloud service;
- an input unit (4) being adapted for receiving a trigger, especially a request, a query or a prompt, from a user of the cooking device;
- a processor (5) for generating, based on the trigger, a new recipe using a recipe generator being stored in the storage unit of the control unit; and
- an output unit (6) for providing the new recipe to the user.

13. Central entity (50), preferably a server or a cloud service, comprising
- a storage unit (51) for storing a trained recipe generator, wherein the recipe generator (RG1, RG2) comprises a foundational model, especially a large language model;
- a communication unit (52) for communicating with a control unit of a cooking device; and
- a processor (53) for sending the recipe generator from the central entity to the control unit of the cooking device using the communication unit.

14. System (80) for providing recipes for cooking to a user of a cooking device, comprising
- a cooking device (10), wherein the cooking device preferably comprises a food processor, a blender, an oven (10A), a cooktop (10B), a microwave and/or an exhaust hood (10C);
- a control unit (1) of the cooking device according to claim 12; and
- a central entity (50) according to claim 13;
- wherein the control unit (1) is integrated into the cooking device or is separate from the cooking device, but connected to the cooking device and preferably comprises a computer, a mobile device, a tablet PC, a smartphone (20) and/or a smart speaker (30).

15. A data processing program product comprising instructions which, when the program is executed by a data processing apparatus, cause the data processing apparatus to carry out the method (M1, M2) according to at least one of the claims 1 to 11.
